# EUROPEAN PATENT SPECIFICATION

(11) **EP 3 544 041 B1**
(45) Date of publication and mention of the grant of the patent: **15.09.2021**
(21) Application number: 17872604.8
(22) Date of filing: 05.10.2017
(51) Int. Cl.: H01R 13/68

(54) **CONNECTION MEMBER, MOVING BODY AND POWER SUPPLY SYSTEM**
VERBINDUNGSELEMENT, BEWEGLICHER KÖRPER UND STROMVERSORGUNGSSYSTEM
ÉLÉMENT DE RACCORDEMENT, CORPS MOBILE ET SYSTÈME D'ALIMENTATION ÉLECTRIQUE

(30) Priority: 21.11.2016 JP 2016225793
(43) Date of publication of application: 25.09.2019
(73) Proprietor: Sony Group Corporation, Tokyo 108-0075 (JP)
(72) Inventor: MORITA, Tadashi, Tokyo 141-0022 (JP)
(74) Representative: 2SPL Patentanwälte PartG mbB
(86) International application number: PCT/JP2017/036283
(87) International publication number: WO 2018/092456

(56) References cited:
- JP-A- H 117 875
- JP-A- H0 482 179
- JP-A- H01 136 321
- JP-A- 2003 234 053
- JP-A- 2003 234 053
- JP-A- 2007 035 535
- JP-A- 2007 213 885
- JP-A- 2012 216 478
- US-A- 6 166 618
- US-A1- 2005 220 661
- US-A1- 2007 025 042
- US-A1- 2015 138 683

## Description

### Technical Field

The present disclosure relates to a connection member, a mobile body, and an electric power supply system.

### Background Art

In either DC power feeding or AC power feeding, an arc discharge occurs at power off. In the case of AC, since there is an instant at which the voltage becomes zero at every predetermined time (for example, every 10 milliseconds), the arc discharge stops spontaneously at least within the above-described predetermined time (for example, within 10 milliseconds). In DC power feeding, however, the arc discharge does not stop spontaneously since there is no instant at which the voltage becomes zero.

Therefore, technologies for the purpose of suppressing occurrence of an arc discharge at power off in the case of DC power feeding have been disclosed (see Patent Literature 1, Patent Literature 2 and the like).

US6166618 discloses an electrical safety receptacle including a dielectric housing, first electrical contacts disposed in the housing for electrical connection to one side of an electrical power line, second electrical contacts disposed in the housing for electrical connection to the other side of the electrical power line, and power interruption members provided as part of the second electrical contacts to interrupt the electrical power when an operating and/or environmental temperature exceeds the thermal rating of the power-interruption member at the electrical receptacle thereby causing at least one of the power interruption members to interrupt the electrical power to the electrical receptacle. US 2005/220661 A1 discloses a thermal fuse (102) provided with lead conductors, wherein a length of the lead wires can be 3.5 mm and the rated capacity of the direct current can be 3.5 A. Moroever, JP H 04 82179 A discloses a connection member according to the preamble of claim 1.

### Citation List

### Patent Literature

Patent Literature 1: JP 2003-203721A
Patent Literature 2: JP 2014-522088T

### Disclosure of Invention

### Technical Problem

However, in DC power feeding, when a direct current is flowing through a connection portion of a feeding wire that supplies current, if the connection becomes unstable due to a reduction in contact pressure caused by the looseness of a screw etc., an arc discharge occurs depending on the magnitude of current in this event.

Thus, the present disclosure proposes a new and improved connection member, a new and improved mobile body, and a new and improved electric power supply system that can interrupt a current safely in a situation where an arc discharge occurs.

### Solution to Problem

According to the present disclosure, there is provided a connection member according to claim 1.

Moreover, according to the present disclosure, there is provided a mobile body including: the connection member.

Moreover, according to the present disclosure, there is provided an electric power supply system including: a battery configured to supply DC power; a drive unit configured to be driven by the DC power supplied from the battery; and at least one connection member provided between the battery and the drive unit.

### Advantageous Effects of Invention

As described above, according to the present disclosure, a new and improved connection member, a new and improved mobile body, and a new and improved electric power supply system that can interrupt a current safely in a situation where an arc discharge occurs are provided.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is an explanatory diagram showing a configuration example of a connection member 100 according to an embodiment of the present disclosure.
[FIG. 2] FIG. 2 is an explanatory diagram showing another configuration example of the connection member 100 according to an embodiment of the present disclosure.
[FIG. 3] FIG. 3 is an explanatory diagram showing another configuration example of the connection member 100 according to an embodiment of the present disclosure.
[FIG. 4] FIG. 4 is an explanatory diagram showing a configuration example of a thermal fuse 102.
[FIG. 5] FIG. 5 is an explanatory diagram showing a configuration example of the thermal fuse 102.
[FIG. 6] FIG. 6 is an explanatory diagram showing a situation where a low-temperature melting metal 114 is separated from terminal strips 112a and 112b.
[FIG. 7] FIG. 7 is an explanatory diagram showing a situation where the low-temperature melting metal 114 is separated from the terminal strips 112a and 112b.
[FIG. 8] FIG. 8 is an explanatory diagram showing an example of a connection member 100 having a form in which thermal fuses are incorporated in a screwing-type terminal strip.

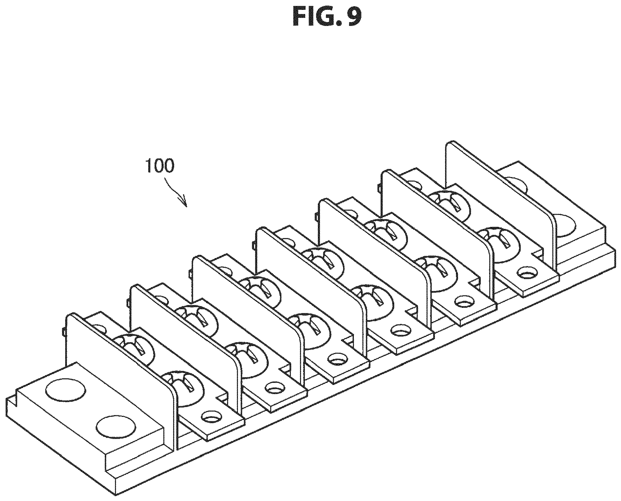

[FIG. 9] FIG. 9 is an explanatory diagram showing an example of a screwing-type terminal strip, which does not form part of the invention.
[FIG. 10] FIG. 10 is an explanatory diagram showing an example of a connection member 100 having a form in which thermal fuses are incorporated in a snap-in-type terminal strip.
[FIG. 11] FIG. 11 is an explanatory diagram showing a configuration example of a connection member 100 in which a thermal fuse 102 is housed in the vicinity of one terminal unit 101.
[FIG. 12] FIG. 12 is an explanatory diagram showing a functional configuration example of a mobile body 40 including a connection member 100.

### Mode(s) for Carrying Out the Invention

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Note that the description is given in the following order.
1. Embodiment of present disclosure
1.1. Background
1.2. Configuration examples
1.3. Modification examples
2. Conclusions

### <1. Embodiment of present disclosure>

### [1.1. Background]

Before describing an embodiment of the present disclosure in detail, the background of an embodiment of the present disclosure is described.

In either DC power feeding or AC power feeding, an arc discharge occurs at power off. In the case of AC, since there is an instant at which the voltage becomes zero at every predetermined time (for example, every 10 milliseconds), the arc discharge stops spontaneously at least within the above-described predetermined time (for example, within 10 milliseconds). In DC power feeding, however, the arc discharge does not stop spontaneously since there is no instant at which the voltage becomes zero.

Therefore, as described above, technologies for the purpose of suppressing occurrence of an arc discharge at power off in the case of DC power feeding have been disclosed.

However, in DC power feeding, when a direct current is flowing through a connection portion of a feeding wire that supplies current, if the connection becomes unstable due to a reduction in contact pressure caused by the looseness of a screw etc., an arc discharge occurs depending on the magnitude of current in this event.

A breaker that detects, from the outside, heat and light generated by an arc discharge and interrupts the electric power has been proposed; however, if a breaker that detects heat generation is installed for each connection portion, the installation cost swells largely. Further, in a system that detects light generated by an arc discharge, the entire circuit is interrupted due to the detection of light, and it takes a long time to identify the fault portion.

Thus, in view of the respects described above, the present discloser conducted extensive studies on technology that, in a case where DC power feeding is performed, can interrupt the current safely in a situation where an arc discharge occurs. As a result, the present discloser has devised a connection member that, in a case where DC power feeding is performed, can interrupt the current safely in a situation where an arc discharge occurs.

Hereinabove, an outline of an embodiment of the present disclosure is described.

### [1.2. Configuration examples]

Next, configuration examples of a connection member according to an embodiment of the present disclosure are described with reference to the drawings.

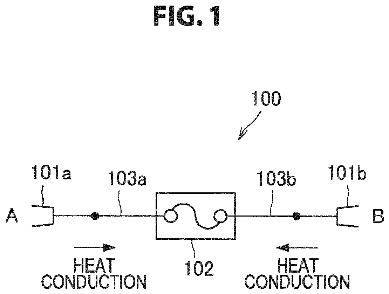

FIG. 1 is an explanatory diagram showing a configuration example of a connection member 100 according to an embodiment of the present disclosure. Hereinbelow, a configuration example of the connection member 100 according to an embodiment of the present disclosure is described using FIG. 1.

The connection member 100 shown in FIG. 1 is a member for relaying electrical connections in electric power supply based on direct current. As shown in FIG. 1, the connection member 100 according to an embodiment of the present disclosure includes terminal units 101a and 101b and a thermal fuse 102 provided between the terminal units 101a and 101b.

Each of the terminal units 101a and 101b is an electrical terminal connected to an electric wire that conducts direct current. Thus, each of the terminal units 101a and 101b contains a metal having electrical conductivity. In the example shown in FIG. 1, each of the terminal units 101a and 101b has a Y-shaped form, and an electric wire that conducts direct current is connected to each of the terminal units 101a and 101b by, for example, screwing. Note that the terminal units 101a and 101b and the electric wires that conduct direct current may be bonded by, as well as the above, magnetic force, or may be bonded by soldering.

The thermal fuse 102 is connected to the terminal units 101a and 101b by lead wires 103a and 103b, respectively. The thermal fuse 102 contains a metal having the property of not blowing due to heat generated when a direct current flows through the terminal units 101a and 101b ordinarily.

Then, the metal provided in the thermal fuse 102 has the property of, if the connection in the terminal unit 101a or 101b becomes unstable due to vibration or the like and an arc discharge occurs in the terminal unit 101a or 101b, blowing due to heat in this event.

Thus, the thermal fuse 102 is provided in the vicinity of the terminal units 101a and 101b. The length of each of the lead wires 103a and 103b may be changed in accordance with the magnitude of current flowing through the connection member 100. The length of each of the lead wires 103a and 103b is 1 millimeter per ampere of current flowing through the connection member 100. The amount of heat transfer is in direct proportion to the diameter of the wire material based on the allowable current capacity, and is in inverse proportion to the length of the wire material; thus, as a regulation for ensuring safety, there is a regulation that, the larger the allowable current is, the thicker the wire shape should be. Hence, also the length from each of the terminal units 101a and 101b to the thermal fuse 102 may be selected in accordance with this relationship. In the connection member 100, taking mounting into consideration, the proportion relationship between the current and the length from each of the terminal units 101a and 101b to the thermal fuse 102 is set to 1 A/mm, and a material that melts due to heat generated when an arc discharge occurs in the terminal unit 101a or 101b is used for the thermal fuse 102.

By having such a configuration, if the electrical connection in the terminal unit 101a or 101b becomes unstable due to vibration or the like and an arc discharge occurs in the terminal unit 101a or 101b, the connection member 100 according to an embodiment of the present disclosure can cause the thermal fuse 102 to blow by means of heat generated in association with the arc discharge.

By causing the thermal fuse 102 to blow by means of heat generated in association with the arc discharge, the connection member 100 can cause the direct current to be interrupted safely even if the electrical connection in the terminal unit 101a or 101b becomes unstable.

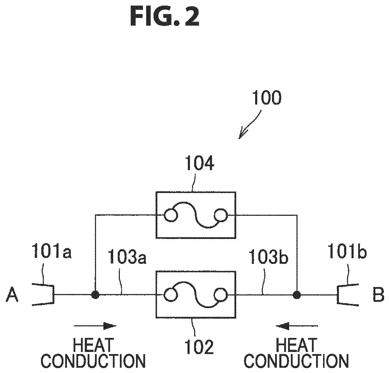

FIG. 2 is an explanatory diagram showing another configuration example of the connection member 100 according to an embodiment of the present disclosure. The connection member 100 shown in FIG. 2 differs from the connection member 100 shown in FIG. 1 in that a current fuse 104 is provided in parallel to the thermal fuse 102.

The connection member 100 shown in FIG. 2 has a configuration in which energy generated at the time of the blowing of the thermal fuse 102 is caused to detour to the current fuse 104. By causing energy generated at the time of the blowing of the thermal fuse 102 to detour to the current fuse 104, the connection member 100 shown in FIG. 2 can extinguish the arc while keeping the state where the energy generated at the time of the blowing of the thermal fuse 102 is confined in the inside of the casing of the current fuse 104.

It is easy to select the thermal fuse 102 in such a manner that the electric resistance based on the metal in the thermal fuse 102 is lower than the electric resistance of the current fuse 104. Hence, by providing the current fuse 104 in parallel to the thermal fuse 102, also heat generation due to the current flowing through the thermal fuse 102 can be suppressed to a low level. Therefore, in normal times, the possibility of the melting of the thermal fuse 102 due to the current flowing through the thermal fuse 102 is very low.

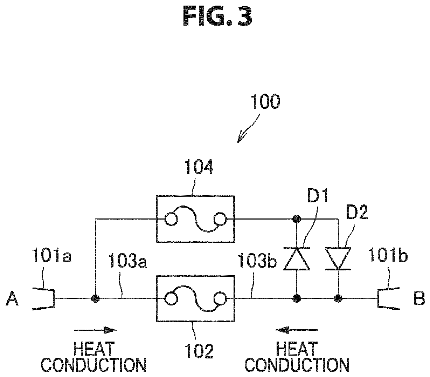

FIG. 3 is an explanatory diagram showing another configuration example of the connection member 100 according to an embodiment of the present disclosure. The connection member 100 shown in FIG. 3 differs from the connection member 100 shown in FIG. 2 in that diodes D1 and D2 that individually conduct currents in mutually opposite directions are provided between the thermal fuse 102 and the current fuse 104.

The effect by providing the diodes D1 and D2 is that a current is allowed to flow through the current fuse 104 only in a case where the voltage generated between both ends of the thermal fuse 102 is more than or equal to the forward voltage of the diode D1 or D2. That is, by providing the diodes D1 and D2, the connection member 100 shown in FIG. 3 can prevent the current fuse 104 from deteriorating due to the flowing of current through the current fuse 104 in ordinary times.

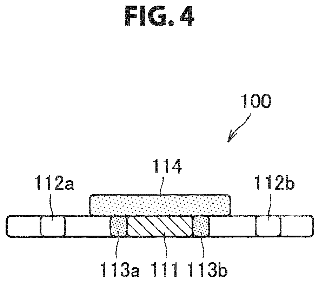

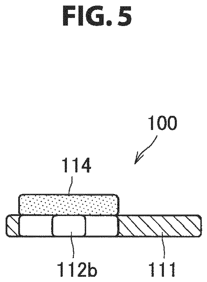

FIGS. 4 and 5 are explanatory diagrams showing a configuration example of the thermal fuse 102. The thermal fuse 102 shown in FIGS. 4 and 5 has a structure in which a bimetal 111 is provided via terminal strips 112a and 112b and insulators 113a and 113b and a low-temperature melting metal 114 is placed on the bimetal 111.

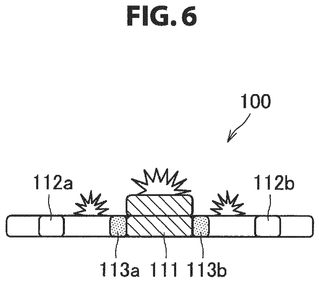

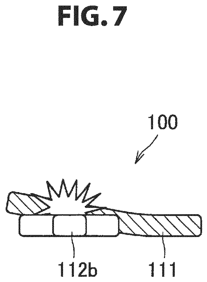

The bimetal 111 has the property of starting to warp at the temperature at which the low-temperature melting metal 114 starts to melt. By having such a property, the bimetal 111 can separate the melted low-temperature melting metal 114 from the terminal strips 112a and 112b, and can create a blowout state in terms of electric power. FIGS. 6 and 7 are explanatory diagrams showing a situation where the bimetal 111 starts to warp at the temperature at which the low-temperature melting metal 114 starts to melt and the low-temperature melting metal 114 is separated from the terminal strips 112a and 112b.

### [1.3. Modification examples]

The connection member 100 can take various forms. Various modification examples of the connection member 100 will now be described.

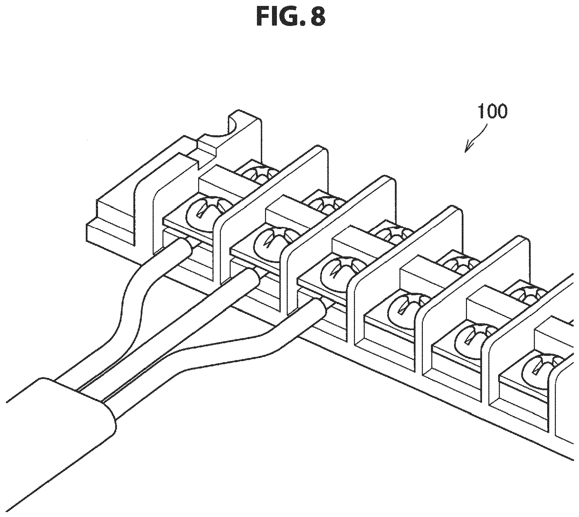

FIG. 8 is an explanatory diagram showing an example of a connection member 100 that has a form in which thermal fuses are incorporated in a screwing-type terminal strip. By thus providing a thermal fuse in the inside of the connection member 100 that connects conducting wires by means of screws, the thermal fuse blows if the electrical connection in the terminal unit 101a or 101b becomes unstable, and the direct current can be caused to be interrupted safely.

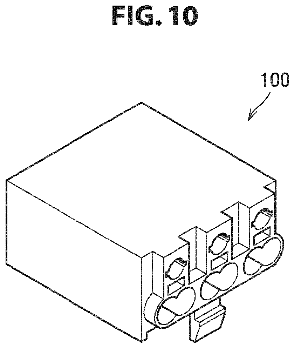

FIG. 10 is an explanatory diagram showing an example of a connection member 100 that has a form in which thermal fuses are incorporated in a snap-in-type terminal strip.

Although each of the connection members 100 described above has a configuration in which the terminal units 101a and 101b are provided in the vicinities of both ends of the thermal fuse 102, the present disclosure is not limited to related examples. The number of terminal units may be only one.

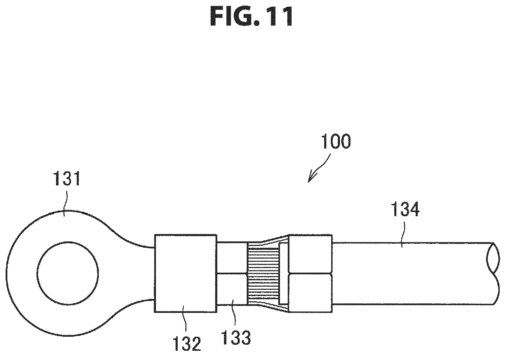

FIG. 11 is an explanatory diagram showing another configuration example of the connection member 100 according to an embodiment of the present disclosure. The connection member 100 shown in FIG. 11 includes a round-shaped terminal 131, a fuse unit 132 in which a thermal fuse is housed, a distribution cable 134, and a pressure bonding unit 133 that pressure-bonds the round-shaped terminal 131 and the distribution cable 134.

If the electrical connection in the round-shaped terminal 131 becomes unstable and an arc discharge occurs, the thermal fuse housed in the fuse unit 132 blows due to heat generated by the arc discharge. By the blowing of the thermal fuse housed in the fuse unit 132, the connection member 100 can cause the direct current to be interrupted safely even if the electrical connection in the round-shaped terminal 131 becomes unstable.

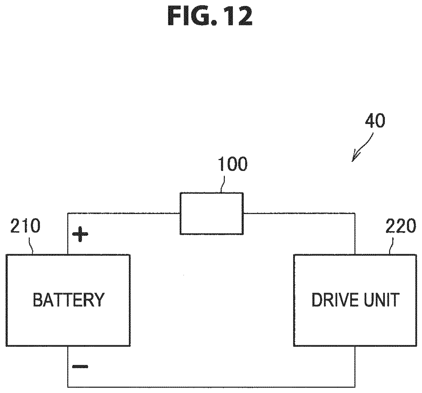

FIG. 12 is an explanatory diagram showing a functional configuration example of a mobile body 40 including the connection member 100. The mobile body 40 may be, for example, a mobile body that uses gasoline as a motive power source like a gasoline-powered car, or may be a mobile body that uses a battery capable of being charged and discharged as a main motive power source, such as an electric car, a hybrid car, or an electric motorcycle. FIG. 12 shows an example in a case where the mobile body 40 includes a battery 210 and a drive unit 220 that is driven by electric power supplied from the battery. The drive unit 220 may include, for example, accessories provided in a vehicle, such as windshield wipers, power windows, lights, a car navigation system, and an air conditioner, an apparatus that causes the mobile body 40 to be driven, such as a motor, etc.

Then, in the mobile body 40 shown in FIG. 12, the connection member 100 is provided at an intermediate position of a path through which DC power is supplied from the battery 210 to the drive unit 220. In the mobile body 40 shown in FIG. 12, the connection member 100 is provided on a path through which DC power is supplied from the battery 210 to the drive unit 220; thereby, for example, even in a case where the connection state in the connection member 100 becomes unstable and an arc discharge occurs, the direct current can be interrupted safely.

Note that, although FIG. 12 shows an example of a mobile body 40 in which the number of connection members 100 is only one, the present disclosure is not limited to related examples. That is, a plurality of connection members 100 may be provided at intermediate positions of a path through which DC power is supplied. Further, connection members 100 may be provided not only at intermediate positions of a path through which DC power is supplied from the battery 210 to the drive unit 220 but also in other places, for example, at an intermediate position of a path for charging the battery 210 with DC power. By providing the connection member 100 at an intermediate position of a path for charging the battery 210 with DC power, the mobile body 40 can charge the battery 210 with DC power safely.

### <2. Conclusions>

As described hereinabove, according to an embodiment of the present disclosure, a connection member 100 for direct current including a thermal fuse that, if an arc discharge occurs at a connection point, blows due to heat generated on the basis of the arc discharge is provided.

The preferred embodiment(s) of the present disclosure has/have been described above with reference to the accompanying drawings, whilst the present disclosure is not limited to the above examples. A person skilled in the art may find various alterations and modifications within the scope of the appended claims, which defines the technical scope of the present invention.

Further, the effects described in this specification are merely illustrative or exemplified effects, and are not limitative. That is, with or in the place of the above effects, the technology according to the present disclosure may achieve other effects that are clear to those skilled in the art from the description of this specification.

### Reference Signs List

- 100: connection member
- 101a, 101b: terminal unit
- 102: thermal fuse
- 103a, 103b: lead wire
- 104: current fuse

## Claims

1. A connection member (100) comprising:
a terminal unit (101a, 101b) having electrical conductivity; and
a thermal fuse (102) connected to the terminal unit (101a, 101b) by a lead wire (103a, 103b), wherein the thermal fuse (102) is provided in a vicinity of the terminal unit (101a, 101b), **characterized in that** the thermal fuse (102) has a property of not blowing due to heat generated when a direct current flows through the terminal unit (101a, 101b) but blowing due to heat generated when an arc discharge occurs,
wherein a length of each lead wire (103a, 103b) connecting the thermal fuse (102) and each terminal unit (101a, 101b) is 1 millimeter per ampere of rated capacity of the direct current.

2. The connection member (100) according to claim 1, further comprising:
a current fuse (104) provided in parallel to the thermal fuse (102).

3. The connection member (100) according to claim 2, further comprising:
diodes provided bidirectionally between the thermal fuse (102) and the current fuse (104) .

4. The connection member (100) according to claim 1,
wherein terminal units (101a, 101b) are provided at both ends of the thermal fuse (102).

5. The connection member (100) according to claim 1,
wherein the terminal unit (100) has a structure of being fastened by a screw to an electric wire configured to conduct the direct current.

6. The connection member (100) according to claim 1,
wherein the terminal unit (100) is pressure-bonded to an electric wire configured to conduct the direct current.

7. The connection member (100) according to claim 1,
wherein the terminal unit (100) has a structure of being bonded by magnetic force to an electric wire configured to conduct the direct current.

8. The connection member (100) according to claim 1,
wherein the thermal fuse (102) includes
a metal that blows at a blowing temperature, and
a bimetal that is provided in contact with the metal and of which a bending manner changes around the blowing temperature.

9. A mobile body comprising:
the connection member (100) according to claim 1.

10. An electric power supply system (40) comprising:
a battery (210) configured to supply DC power;
a drive unit (220) configured to be driven by DC power supplied from the battery (210); and
at least one connection member (100) according to claim 1 provided between the battery (210) and the drive unit (220).

## Patentansprüche

1. Verbindungsglied (100), umfassend:
eine Anschlusseinheit (101a, 101b) mit elektrischer Leitfähigkeit; und
eine Thermosicherung (102), die mit der Anschlusseinheit (101a, 101b) durch einen Zuleitungsdraht (103a, 103b) verbunden ist, wobei die Thermosicherung (102) in einer Nähe der Anschlusseinheit (101a, 101b) vorgesehen ist, **dadurch gekennzeichnet, dass** die Thermosicherung (102) eine Eigenschaft aufweist, nicht aufgrund der Wärme, die erzeugt wird, wenn ein Gleichstrom durch die Anschlusseinheit (101a, 101b) fließt, durchzubrennen, aber aufgrund der Wärme, die erzeugt wird, wenn eine Lichtbogenentladung vorkommt, durchzubrennen,
wobei eine Länge jedes Zuleitungsdrahts (103a, 103b), der die Thermosicherung (102) und jede Anschlusseinheit (101a, 101b) verbindet, 1 Millimeter pro Ampere der Nennleistung des Gleichstroms beträgt.

2. Verbindungsglied (100) nach Anspruch 1, ferner umfassend:
eine Stromsicherung (104), die parallel zu der Thermosicherung (102) vorgesehen ist.

3. Verbindungsglied (100) nach Anspruch 2, ferner umfassend:
Dioden, die bidirektional zwischen der Thermosicherung (102) und der Stromsicherung (104) vorgesehen sind.

4. Verbindungsglied (100) nach Anspruch 1,
wobei Anschlusseinheiten (101a, 101b) an beiden Enden der Thermosicherung (102) vorgesehen sind.

5. Verbindungsglied (100) nach Anspruch 1,
wobei die Anschlusseinheit (100) eine Struktur aufweist, durch eine Schraube an einen elektrischen Draht, der konfiguriert ist, den Gleichstrom zu leiten, angebracht zu werden.

6. Verbindungsglied (100) nach Anspruch 1,
wobei die Anschlusseinheit (100) an einen elektrischen Draht, der konfiguriert ist, den Gleichstrom zu leiten, druckgeklebt ist.

7. Verbindungsglied (100) nach Anspruch 1,
wobei die Anschlusseinheit (100) eine Struktur aufweist, durch magnetische Kraft an einen elektrischen Draht, der konfiguriert ist, den Gleichstrom zu leiten, gebunden zu werden.

8. Verbindungsglied (100) nach Anspruch 1,
wobei die Thermosicherung (102) enthält
ein Metall, das bei einer Durchbrenntemperatur durchbrennt, und
ein Bimetall, das in Kontakt mit dem Metall vorgesehen ist und dessen Biegeweise sich um die Durchbrenntemperatur verändert.

9. Mobiler Körper, umfassend:
das Verbindungsglied (100) nach Anspruch 1.

10. System zum Zuführen elektrischer Leistung (40), umfassend:
eine Batterie (210), konfiguriert zum Zuführen von DC-Leistung;
eine Antriebseinheit (220), konfiguriert, durch DC-Leistung, die von der Batterie (210) zugeführt wird, angetrieben zu werden; und
mindestens ein Verbindungsglied (100) nach Anspruch 1, vorgesehen zwischen der Batterie (210) und der Antriebseinheit (220).

## Revendications

1. Élément de raccordement (100) comprenant :
une unité de borne (101a, 101b) ayant une conductivité électrique ; et
un fusible thermique (102) connecté à l'unité de borne (101a, 101b) par un fil conducteur (103a, 103b), où le fusible thermique (102) est pourvu à proximité de l'unité de borne (101a, 101b), **caractérisé en ce que** le fusible thermique (102) a la propriété de ne pas claquer en raison de la chaleur générée lorsqu'un courant continu circule à travers l'unité de borne (101a, 101a, 101b) mais de claquer en raison de la chaleur générée lorsqu'une décharge d'arc se produit,
où une longueur de chaque fil conducteur (103a, 103b) reliant le fusible thermique (102) et chaque unité de borne (101a, 101b) est de 1 millimètre par ampère de capacité nominale du courant continu.

2. Élément de raccordement (100) selon la revendication 1, comprenant en outre :
un fusible de courant (104) pourvu en parallèle du fusible thermique (102).

3. Élément de raccordement (100) selon la revendication 2, comprenant en outre :
des diodes pourvues de manière bidirectionnelle entre le fusible thermique (102) et le fusible de courant (104) .

4. Élément de raccordement (100) selon la revendication 1,
dans lequel des unités de borne (101a, 101b) sont pourvues aux deux extrémités du fusible thermique (102) .

5. Élément de raccordement (100) selon la revendication 1,
dans lequel l'unité de borne (100) a une structure permettant d'être fixée par une vis à un fil électrique configuré pour conduire le courant continu.

6. Élément de raccordement (100) selon la revendication 1,
dans lequel l'unité de borne (100) est liée par pression à un fil électrique configuré pour conduire le courant continu.

7. Élément de raccordement (100) selon la revendication 1,
dans lequel l'unité de borne (100) a une structure permettant d'être liée par force magnétique à un fil électrique configuré pour conduire le courant continu.

8. Élément de raccordement (100) selon la revendication 1,
dans lequel le fusible thermique (102) comprend :
un métal qui claque à une température de soufflage, et
un bilame qui est pourvu au contact du métal et dont la manière dont s'effectue sa flexion change autour de la température de soufflage.

9. Corps mobile comprenant :
l'élément de raccordement (100) selon la revendication 1.

10. Système d'alimentation en énergie électrique (40) comprenant :
une batterie (210) configurée pour délivrer un courant continu ;
une unité de commande (220) configurée pour être commandée par le courant continu délivré par la batterie (210) ; et
au moins un élément de raccordement (100), selon la revendication 1, pourvu entre la batterie (210) et l'unité de commande (220).
